# EUROPÄISCHE PATENTSCHRIFT

(11) **EP 2 606 546 B1**
(45) Veröffentlichungstag und Bekanntmachung des Hinweises auf die Patenterteilung: **21.04.2021**
(21) Anmeldenummer: 11749325.4
(22) Anmeldetag: 04.08.2011
(51) Int. Cl.: H02H 3/33, H02H 3/04, H02H 3/05, H01H 71/74, H01H 83/04, H02H 3/027

(54) **SCHALTGERÄT**
SWITCHING DEVICE
APPAREIL DE COMMUTATION

(30) Priorität: 19.08.2010 AT 13912010
(43) Veröffentlichungstag der Anmeldung: 26.06.2013
(73) Patentinhaber: Eaton Intelligent Power Limited, Dublin 4 (IE)
(72) Erfinder: DOBUSCH, Gerhard, A-1180 Wien (AT)
(74) Vertreter: Eaton IP Group EMEA
(86) Internationale Anmeldenummer: PCT/AT2011/000335
(87) Internationale Veröffentlichungsnummer: WO 2012/021909

(56) Entgegenhaltungen:
- EP-A1- 0 936 716
- EP-A2- 2 107 662
- AT-A4- 505 635
- DE-A1- 1 965 425
- DE-B3-102008 006 360
- US-A1- 2005 162 788
- US-A1- 2008 013 227

## Beschreibung

Die Erfindung betrifft eine Anordnung aus einem ersten Fehlerstromschutzschalter und einem zweiten Fehlerstromschutzschalter sowie einem Schaltgerät gemäß Patentanspruch 1.

Fehlerstromschutzschalter besitzen eine Prüfvorrichtung um die Funktion des betreffenden Fehlerstromschutzschalters, daher das Auslösen beim Auftreten eines Fehlerstromes, zu überprüfen. Da dabei der betreffende Fehlerstromschutzschalter auslöst, werden die nachgeschalteten Teilnetze abgeschaltet, und folglich auch sämtliche angeschlossenen elektrischen Geräte. Dies wird von den meisten Nutzern elektrischer Anlagen als unangenehm empfunden, da bei vielen Geräten individuelle Einstellungen gelöscht werden. Weiters gibt es zahlreiche elektrische Anlagen, bei welchen eine Abschaltung zu gravierenden Problemen führen würde, da etwa die betreffenden elektrischen Anlagen Sicherheitsaufgaben wahrnehmen oder technische Prozesse steuern, und daher eine Abschaltung der betreffenden Anlagen zu Problemen führen kann.

Bei Umschaltvorgängen, bei welchen ein Laststrom von einem Fehlerstromschutzschalter auf einen anderen Fehlerstromschutzschalter umgeschaltet wird, kann das temporäre Auftreten unsymmetrischer Potentiale an wenigstens einem der beiden Fehlerstromschutzschalter nicht ausgeschlossen werden. Derartige Potentialunterschiede können jedoch an einem Fehlerstromschutzschalter wie ein auftretender Fehlerstrom wirken, und folglich den Fehlerstromschutzschalter unbeabsichtigt und ohne Auftreten eines Fehlerstromes auslösen. Dadurch wird aber möglicherweise ein unterbrechungsfreies Umschalten von einem Fehlerstromschutzschalter zu einem anderen Fehlerstromschutzschalter verhindert.

Die EP 2 107 662 A2 beschreibt eine Fehlerstromschutzanordnung mit zwei vollständigen Auslösekreisen mit seriell angeordneten Summenstromwandlern, welche parallel angeordnete Schaltkontakte ansteuern. Jeder der beiden Auslösekreise weist eine eigenständige Prüfanordnung auf. Durch die parallele Ausführung der Schaltkontakte ist die Prüfung jeder der beiden Auslösekreise ohne Unterbrechung des Stromflusses durch die Fehlerstromschutzanordnung möglich.

Die DE 19 65 425 A1 beschreibt einen zeitverzögerten Überstromauslöser, wobei der zeitliche Verlauf eines Stromes als Auslösekriterium dient.

Die US 2008/013227 A1 beschreibt ein CPU-kontrolliertes Schaltgerät mit der Fähigkeit zum unterbrechungsfreien Selbsttest. Dabei ist ein unabhängiger Test der elektronischen sowie der mechanischen Komponenten des betreffenden Schutzschalters vorgesehen. Beim Selbsttest wird erst ein Fehlersignal induziert, sowie dessen Detektion von dem µC überwacht. Da der µC die Trennkontakte des Schutzschalters, welche in der US 2008/013227 A1 lediglich als Relais bezeichnet werden, überwacht und steuert, ist eine zusätzliches Sperren der Relais während des Selbsttests nicht erforderlich. Nachfolgend werden die mechanischen Komponenten getestet, wobei das sog. Hauptrelais überbrückt wird, anschließend geöffnet wird.

Die US 2005/0162788 A1 und die EP 0 936 716 A1 zeigen Schutzschalter, bei welchen die Verzögerungszeit für die Auslösung von außen beeinflussbar ist.

Aufgabe der Erfindung ist es daher eine Anordnung der eingangs genannten Art anzugeben, mit welcher die genannten Nachteile vermieden werden können, und mit welcher die Funktionsprüfung des Fehlerstromschutzschalters ohne zwingender Netzabschaltung unterstützt wird.

Erfindungsgemäß wird dies durch die Merkmale des Patentanspruches 1 erreicht.

Dadurch kann während eines, als unterbrechungsfrei beabsichtigten Umschaltvorgangs eines Laststroms von einem ersten Fehlerstromschutzschalter auf einen zweiten Fehlerstromschutzschalter, verhindert werden, dass einer der beiden Fehlerstromschutzschalter dennoch unbeabsichtigter Weise auslöst. Dadurch kann eine Fehlauslösung während des Umschaltvorgangs verhindert werden. Dadurch können unbeabsichtigte Netzabschaltungen im Zuge einer Funktionsprüfung eines Fehlerstromschutzschalters verhindert werden.

Durch ein derartiges Schaltgerät besteht die Möglichkeit zwei Fehlerstromschutzschalter parallel zu schalten, und einen Laststrom von einem der beiden Fehlerstromschutzschalter auf den anderen Fehlerstromschutzschalter umzuschalten, ohne dass es dabei zu einem Auslösen eines der beiden Fehlerstromschutzschalter und folglich zu einer Netzabschaltung kommt. Dadurch kann die Funktionsprüfung an Fehlerstromschutzschaltern durchgeführt werden, ohne dass dadurch Einstellungen an elektrischen Geräten verloren gehen würden, oder es zu Sicherheitsrisiken aufgrund abgeschalteter wichtiger Geräte kommt. Dadurch kann ein, als defekt erkannter Fehlerstromschutzschalter ausgetauscht werden, ohne dass hiezu das dem Fehlerstromschutzschalter nachgeschaltete elektrische Teilnetz abgeschaltet werden muss.

Die Unteransprüche 2 bis 8, betreffen weitere vorteilhafte Ausgestaltungen der Erfindung.

Die Erfindung betrifft weiters ein Verfahren zur unterbrechungsfreien Funktionsprüfung eines ersten Fehlerstromschutzschalters gemäß dem Patentanspruch 9.

Wie eingangs dargelegt bestehen Probleme bei der Funktionsprüfung an einem Fehlerstromschutzschalter, aufgrund von Netzabschaltungen als wenigstens mittelbare Folge der Funktionsprüfung.

Aufgabe der Erfindung ist es daher ein Verfahren der vorstehend genannten Art anzugeben, mit welchem die genannten Nachteile vermieden werden können, und mit welchem die Funktionsprüfung an einem Fehlerstromschutzschalter ohne zwingender Netzabschaltung ermöglicht wird.

Erfindungsgemäß wird dies durch die Merkmale des Patentanspruches 9 erreicht.

Dadurch kann eine Funktionsprüfung an einem Fehlerstromschutzschalter durchgeführt werden, ohne dass es zu einer Netzabschaltung kommt. Dadurch kann die Funktionsprüfung an Fehlerstromschutzschaltern durchgeführt werden, ohne dass dadurch Einstellungen an elektrischen Geräten verloren gehen würden, oder es zu Sicherheitsrisiken aufgrund abgeschalteter wichtiger Geräte kommt.

Die Unteransprüche 10 bis 12 betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Blockschaltbild einer ersten Ausführungsform einer Anordnung eines Schaltgeräts und zweier Fehlerstromschutzschalter, die nicht der Erfindung entspricht;
Fig. 2 ein Blockschaltbild einer zweiten bevorzugten Ausführungsform einer Anordnung eines Schaltgeräts und zweier Fehlerstromschutzschalter gemäß der Erfindung;
Fig. 3 ein Blockschaltbild einer dritten Ausführungsform einer Anordnung eines Schaltgeräts und zweier Fehlerstromschutzschalter, die nicht der Erfindung entspricht;
Fig. 4 eine axonometrische Ansicht einer ersten baulichen Ausgestaltung einer Anordnung eines Schaltgeräts, zweier Fehlerstromschutzschalter und einer Kopplungsvorrichtung;
Fig. 5 eine erste axonometrische Ansicht einer zweiten baulichen Ausgestaltung einer Anordnung eines Schaltgeräts, zweier Fehlerstromschutzschalter und einer Kopplungsvorrichtung; und
Fig. 6 eine zweite axonometrische Ansicht einer zweiten baulichen Ausgestaltung einer Anordnung eines Schaltgeräts, zweier Fehlerstromschutzschalter und einer Kopplungsvorrichtung.

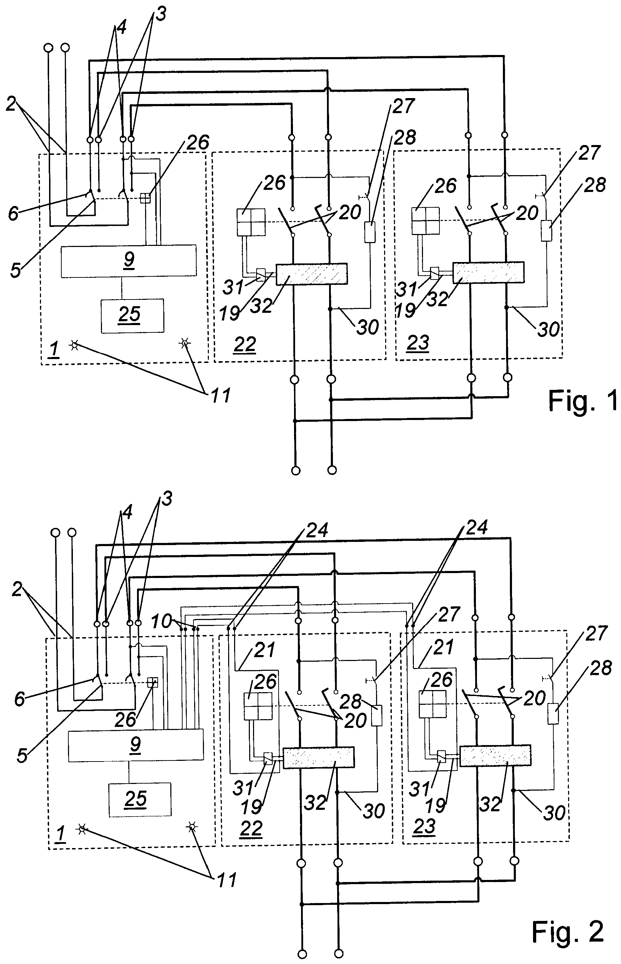

Die Fig. 1 bis 6 zeigen jeweils eine Anordnung aus einem ersten Fehlerstromschutzschalter 22, einem zweiten Fehlerstromschutzschalter 23, sowie einem Schaltgerät 1, wobei der erste Fehlerstromschutzschalter 22 und der zweite Fehlerstromschutzschalter 23 mittels einer Kopplungseinheit schaltungstechnisch parallel zueinander mit dem Schaltgerät 1 gekoppelt sind.

Die gegenständliche Erfindung betrifft ein Verfahren zur unterbrechungsfreien Funktionsprüfung wenigstens eines ersten Fehlerstromschutzschalters 22, sowie Vorrichtungen zur vorteilhaften Durchführung des Verfahrens. Nachfolgend werden bevorzugte Ausführungen der betreffenden Vorrichtungen beschrieben, wobei das nachfolgend beschriebene erfindungsgemäße Verfahren bevorzugt nicht an die Verwendung der beschriebenen Vorrichtungen gebunden sein muss.

Besagte Vorrichtungen umfassen bevorzugte Ausführungen eines Fehlerstromschutzschalters 22, 23, ein spezielles Schaltgerät 1 sowie eine Kopplungsvorrichtung 12 zur wenigstens schaltungstechnischen und weiters insbesondere mechanischen Verbindung zweier Fehlerstromschutzschalter mit dem Schaltgerät.

Die Fig. 1 bis 3 zeigen jeweils u.a. ein Blockschaltbild einer jeweils unterschiedlichen Ausführungsform eines Schaltgeräts 1 mit wenigstens einem ersten elektrischen Schaltgerät-Eingang 2, sowie wenigstens einem ersten elektrischen Schaltgerät-Ausgang 3 und wenigstens einem zweiten elektrischen Schaltgerät-Ausgang 4, wobei in einem ersten Betriebszustand des Schaltgeräts 1 der erste Schaltgerät-Eingang 2 mit dem ersten Schaltgerät-Ausgang 3 schaltungstechnisch verbunden ist, wobei in einem zweiten Betriebszustand des Schaltgeräts 1 der erste Schaltgerät-Eingang 2 mit dem zweiten Schaltgerät-Ausgang 4 schaltungstechnisch verbunden ist, wobei das Schaltgerät 1 zum unterbrechungsfreien Übergang vom ersten Betriebszustand in den zweiten Betriebszustand und/oder vom zweiten Betriebszustand in den ersten Betriebszustand ausgebildet ist.

Durch ein derartiges Schaltgerät 1 besteht die Möglichkeit zwei Fehlerstromschutzschalter 22, 23 parallel zu schalten, und einen Laststrom von einem der beiden Fehlerstromschutzschalter 22, 23 auf den anderen Fehlerstromschutzschalter 23, 22 umzuschalten, ohne dass es dabei zu einem Auslösen eines der beiden Fehlerstromschutzschalter 22, 23 und folglich zu einer Netzabschaltung kommt. Dadurch kann die Funktionsprüfung an Fehlerstromschutzschaltern 22, 23 durchgeführt werden, ohne dass dadurch Einstellungen an elektrischen Geräten verloren gehen würden, oder es zu Sicherheitsrisiken aufgrund ungeplanter Abschaltungen wichtiger elektrischer Geräte kommt. Dadurch kann auch ein, als defekt erkannter Fehlerstromschutzschalter 22 ausgetauscht werden, ohne dass hiezu das dem Fehlerstromschutzschalter 22, 23 nachgeschaltete elektrische Teilnetz abgeschaltet werden muss, da der jeweils andere Fehlerstromschutzschalter 23 während der Zeitdauer des Tauschvorganges das nachgeschaltete elektrische Netz, sowie die angeschlossenen Verbraucher schützt.

Der Begriff "unterbrechungsfrei" bedeutet bevorzugt ein Umschalten eines Laststromes von einem Schaltgerät, im gegenständlichen Fall etwa vom ersten Fehlerstromschutzschalter 22, auf ein anderes Schaltgerät, im gegenständlichen Fall etwa auf den zweiten Fehlerstromschutzschalter 23, ohne dass es dadurch zu Unterbrechungen der Stromversorgung nachgeschalteter Komponenten kommt, sei es aufgrund kurzzeitiger Netzunterbrechungen während des Schaltvorganges an sich oder aufgrund ungewollter Auslösungen wenigstens eines der Fehlerstromschutzschalter 22, 23.

Es ist vorgesehen, dass das Schaltgerät 1 einen ersten und einen zweiten Betriebszustand einnehmen kann. Bevorzugt ist vorgesehen, dass das Schaltgerät 1 lediglich diese beiden stabilen Betriebszustände aufweist, und der Übergang von einem dieser Betriebszustände in den jeweils anderen als zeitlich kurzer Umschaltvorgang ausgebildet ist, welcher selbst nicht als stabiler Betriebszustand vorgesehen ist.

In Weiterbildung kann vorgesehen sein, dass das Schaltgerät 1 weiters einen dritten Betriebszustand aufweist, in welchem der erste Schaltgerät-Eingang 2 mit dem ersten Schaltgerät-Ausgang 3 und mit dem zweiten Schaltgerät-Ausgang 4 schaltungstechnisch verbunden ist, sowie dass die Übergänge vom ersten bzw. zweiten Betriebszustand in den dritten Betriebszustand sowie vom dritten Betriebszustand in den ersten bzw. zweiten Betriebszustand ebenfalls unterbrechungsfrei ausgebildet ist. Dadurch ist nicht nur ein unterbrechungsfreies Umschalten eines Laststromes von einem ersten Fehlerstromschutzschalter 22 auf einen zweiten Fehlerstromschutzschalter 23 bzw. umgekehrt möglich, sondern weiters ein stabiler Parallelbetrieb der beiden Fehlerstromschutzschalter 22, 23.

Das Schaltgerät 1 weist - wie bereits angedacht - wenigstens einen ersten elektrischen Schaltgerät-Eingang 2, sowie wenigstens einen ersten elektrischen Schaltgerät-Ausgang 3 und wenigstens einen zweiten elektrischen Schaltgerät-Ausgang 4 auf. Die Begriffe Eingang sowie Ausgang sind dabei bevorzugt dahingehend auszulegen, dass die jeweils im Singular gebrauchten Begriffe bevorzugt sämtliche funktional erforderlichen Anschlüsse eines Ein- bzw. Ausgangs 2, 3, 4 umfassen. In den dargestellten bevorzugten Ausführungen umfasst der erste Schaltgerät-Eingang 2 zwei Anschlüsse, ebenso jeweils der erste und der zweite Schaltgerät-Ausgang 3, 4. Bevorzugt weist ein Schaltgerät-Eingang 2 dieselbe Anzahl Anschlüsse wie jeder der Schaltgerät-Ausgänge 3, 4 auf, sowie wie das zu schützende bzw. zu schaltende elektrische Netz an Leitern, daher Phasen und Neutralleiter, aufweist.

Das Schaltgerät 1 weist bevorzugt wenigstens einen Schalter 5, 7 auf, welcher schaltungstechnisch mit dem ersten Steuergerät-Eingang 2, dem ersten Steuergerät-Ausgang 3 und dem zweiten Steuergerät-Ausgang 4 verbunden ist, wobei in einer ersten Schaltstellung des Schalters 5, 7 der erste Steuergerät-Eingang 2 mit dem ersten Steuergerät-Ausgang 3 schaltungstechnisch verbunden ist, und wobei in einer zweiten Schaltstellung des Schalters 5, 7 der erste Steuergerät-Eingang 3 mit dem zweiten Steuergerät-Ausgang 4 schaltungstechnisch verbunden ist. Der betreffende Schalter 5, 7 ist dabei derart ausgebildet, dass der Übergang von der ersten Schaltstellung in die zweite Schaltstellung unterbrechungsfrei erfolgt. Dabei kann vorgesehen sein, dass der Schalter 5, 7 lediglich die beiden beschriebenen stabilen Schaltzustände aufweist. Weiters ist - bei Ausbildung des Schaltgeräts 1 mit einem vorstehend beschriebenen dritten Betriebszustand - auch eine entsprechende dritte Schaltstellung, etwa als Mittelstellung des Schalters 5, 7 realisiert, vorgesehen.

Gemäß den Ausführungsformen, wie diese in den Fig. 1 und 2 dargestellt sind, ist bevorzugt vorgesehen, dass das Schaltgerät 1 wenigstens einen mechanischen Schalter 5 mit wenigstens bereichsweise überlappenden Schaltkontakten 6 aufweist. In den betreffenden Figuren ist dies durch die Symboldarstellung des mechanischen Schalters 5 verdeutlicht. Mittels eines derartigen mechanischen Schalters 5 kann ein gegen elektrische Störungen unempfindliches Schaltgerät 1 gebildet werden, welches einfach auch unter schwierigen Bedingungen gewartet werden kann.

Bevorzugt ist vorgesehen, dass das die Kontakte des mechanischen Schalters 5 mittels einer Schaltwelle verbunden und geführt werden. Weiters ist bevorzugt vorgesehen, dass der mechanische Schalter 5 mit einem Schaltschloss verbunden ist. Dadurch kann der Schaltvorgang des betreffenden mechanischen Schalters 5 vorgegeben und zwangsgesteuert werden.

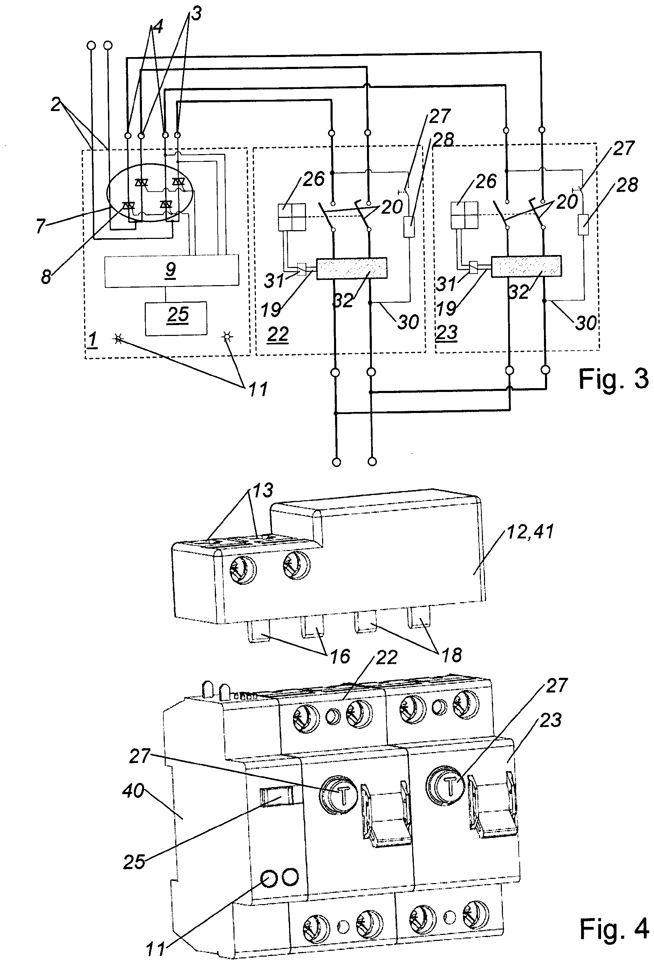

Gemäß der Ausführungsform, wie diese in Fig. 3 dargestellt ist, ist vorgesehen, dass das Schaltgerät 1 wenigstens einen elektronischen Schalter 7 aufweist. Dadurch kann ein Schaltgerät 1 gebildet werden, welches in hohem Maße unempfindlich gegenüber mechanischen Erschütterungen ist, und schnelle Umschaltvorgänge ermöglicht.

Der betreffende elektronische Schalter 7 ist bevorzugt als Schaltungsanordnung umfassend eine vorgebbare Mehrzahl Triacs 8 ausgebildet, wie dies in Fig. 3 dargestellt ist. Triac 8 steht dabei für "triode alternating current switch". Es kann jedoch eine Ausbildung umfassend jede Art einer als Schalter wirkenden Schaltungsanordnung umfassend Halbleiter vorgesehen sein, wobei insbesondere vorgesehen ist, dass das schaltende Element als bzw. umfassend einen Transistor ausgebildet ist.

Bevorzugt ist vorgesehen, dass das Schaltgerät 1 wenigstens eine Steuereinheit 9 aufweist, zur Steuerung der Übergänge von einem Betriebszustand zu einem anderen Betriebszustand. Durch eine derartige Steuereinheit 9 kann der Umschaltvorgang aktiv durchgeführt und überwacht werden. Dadurch kann etwa überwacht werden, dass am zweiten Fehlerstromschutzschalter 23 bereits die volle Netzspannung anliegt, ehe der erste Fehlerstromschutzschalter 22 abgeschaltet, daher eingangsseitig vom Netz getrennt, wird. Die Steuereinheit 9 ist bevorzugt als programmierbare Logikschaltung und/oder als Mikroprozessor ausgebildet bzw. umfasst solche. Weiters ist bevorzugt vorgesehen, dass das Schaltgerät 1 ein Netzteil zur Energieversorgung der Steuereinheit 9 aufweist, welche in den Figuren jedoch nicht dargestellt ist.

Gemäß den dargestellten Ausführungsformen eines Schaltgeräts 1, welche sämtliche eine Steuereinheit 9 aufweisen, ist vorgesehen, dass der mechanische bzw. elektronische Schalter 5, 7 von der Steuereinheit 9 gesteuert wird, und mit dieser in Wirkverbindung steht. So ist etwa vorgesehen, dass die Steuereinheit 9 wenigstens mittelbar, bevorzugt über einen elektromechanischen Aktuator, auf das Schaltschloss wirkt; bzw. bei Ausbildung des Schalters 5, 7 als elektronischer Schalter 7 etwa den Gate-Anschluss der dargestellten Triacs ansteuert. Es kann auch vorgesehen sein, dass der mechanische Schalter 5 Teil eines in dem Schaltgerät 1 angeordneten Relais ist, welches von der Steuereinheit angesteuert ist.

Gemäß einer weiteren dargestellten bevorzugten Ausführungsform ist vorgesehen, dass das Schaltgerät 1 wenigstens eine Spannungsmessvorrichtung umfasst, zum Messen einer Spannung an dem ersten Schaltgerät-Ausgang 3 und/oder dem zweiten Schaltgerät-Ausgang 4. Dadurch kann sichergestellt werden, dass vor einem Abschalten des ersten Fehlerstromschutzschalters 22 am zweiten Fehlerstromschutzschalter 23 die volle Netzspannung anliegt. In diesem Zusammenhang ist bevorzugt vorgesehen, dass die Spannungsmessvorrichtung als Teil der Steuereinheit 9 ausgebildet ist, und die Steuereinheit 9 schaltungstechnisch mit dem ersten Schaltgerät-Ausgang 3 und/oder dem zweiten Schaltgerät-Ausgang 4 verbunden ist.

Bevorzugt weist das Schaltgerät 1 weiters wenigstens ein Betätigungselement 25 auf, welches bevorzugt - und sofern eine solche vorgesehen ist - mit der Steuereinheit 9 wirkverbunden ist, wobei - etwa bei einfach ausgeführten Schaltgeräten 1 - vorgesehen sein kann, dass das Betätigungselement 25 etwa als Handbedienelement des, als mechanischer Schalter 5 ausgebildeten, Schalters 5 ausgebildet ist. Bevorzugt und wie dargestellt, ist vorgesehen, dass das Betätigungselement 25 mit der Steuereinheit 9 verbunden ist, und auf diese einwirkt. Weiters ist gemäß einer bevorzugten Ausführungsform eines Schaltgeräts 1 vorgesehen, dass das Schaltgerät 1 wenigstens ein, insbesondere optisches, Signalmittel 11 aufweist, welches insbesondere von der Steuereinheit 9 angesteuert ist. Dadurch können Betriebszustände des Schaltgeräts 1 und/oder der mit diesem verbundenen Fehlerstromschutzschalter 22, 23 angezeigt werden. Dadurch kann einem Benutzer eine Freigabe bzw. ein Auftrag zur Betätigung der Prüfeinrichtung eines der beiden Fehlerstromschutzschalter 22, 23 erteilt werden. Bei den dargestellten Ausführungsformen weist das Schaltgerät 1 zwei, als LED ausgebildete Signalmittel 11 auf. Es sei darauf hingewiesen, dass in den Fig. 1 bis 3 die schaltungstechnischen Verbindungen zwischen der Steuereinheit 9 und den Signalmitteln 11 nicht eingezeichnet sind.

Fig. 1 zeigt eine erste Ausführungsform aus einem gegenständlichen Schaltgerät 1, einem ersten und einen zweiten Fehlerstromschutzschalter 22, 23. Ein - nicht dargestelltes - Energieversorgungsnetz ist an den ersten elektrischen Schaltgerät-Eingang 2 angeschlossen. Ein Eingang des ersten Fehlerstromschutzschalters 22 ist schaltungstechnisch mit dem ersten Schaltgerät-Ausgang 3 verbunden, und ein Eingang des zweiten Fehlerstromschutzschalters 23 ist mit dem zweiten Schaltgerät-Ausgang 4 verbunden.

Das Schaltgerät 1 weist einen mechanischen Schalter 5 auf, welcher von der Steuereinheit 9 angesteuert wird.

Der erste und der zweite Fehlerstromschutzschalter 22, 23 sind gemäß Fig. 1 als netzspannungsunabhängige Fehlerstromschutzschalter ausgebildet, welche jeweils einen Summenstromwandler 32, einen Permanentmagnetauslöser 31, sowie eine Auslöseschaltung bzw. einen Auslösestromkreis 19 und ein Schaltschloss 26 aufweisen, welches eine Schaltwelle ansteuert, an welcher Trennkontakte 20 angeordnet sind. In den Fig. 1 bis 3 sind die Einzelheiten des Auslösestromkreises 19, daher sämtliche Bauteile bzw. Baugruppen dieses Auslösestromkreises 19, nicht dargestellt. Weiters weisen die beiden Fehlerstromschutzschalter 22, 23 jeweils einen Prüfstromkreis 30 mit einem Prüftaster 27 und einem Prüfwiderstand 28 auf. Der Prüfstromkreis verbindet bei geschlossenen Kontakten des Prüftasters 27 die beiden Leiter, des zu schützenden und durch den Fehlerstromschutzschalter 22, 23 geführten Netzes, außen am Summenstromwandler 32 vorbei, und simuliert derart einen Fehlerstrom. Dabei können jedoch auch andere Ausführungen als die Dargestellten vorgesehen sein.

Die beiden in Fig. 1 dargestellten Fehlerstromschutzschalter 22, 23 sind bevorzugt mit einer verzögerten Fehlerstromauslösung ausgestattet. Im Falle eines auftretenden Fehlerstromes lösen derartige Fehlerstromschutzschalter 22, 23 nicht sofort aus, sondern erst, wenn der Fehlerstrom auch nach einer bestimmten Zeit noch anliegt. Derartige Fehlerstromschutzschalter 22, 23 werden auch als G-Typ oder S-Typ bezeichnet.

Bei einer derartigen Anordnung gemäß Fig. 1 ist ein unterbrechungsfreies Umschalten des Laststromes von dem ersten auf den zweiten Fehlerstromschutzschalter 22, 23 möglich, ohne dass es zu einer Auslösung kommt, sofern der Umschaltvorgang in einer geringeren Zeitdauer erfolgt, als die Zeitdauer der Auslöseverzögerung der beiden Fehlerstromschutzschalter 22, 23. Möglicherweise während des Umschaltvorgangs auftretende unsymmetrische Potentiale werden nicht als Fehlerstrom missinterpretiert, da diese lediglich während einer sehr kurzen Zeitspanne auftreten, innerhalb welcher keine Fehlerstromauslösung erfolgt.

Die Fig. 2 und 3 zeigen weitere Ausführungsformen gegenständlicher Anordnungen.

Der Grundaufbau einer Anordnung gemäß Fig. 2 ist weitestgehend identisch zu einem Aufbau gemäß Fig. 1, wobei die Anordnung gemäß Fig. 2 zusätzliche Baugruppen aufweist und der Erfindung entspricht.

Die beiden Fehlerstromschutzschalter 22, 23 gemäß Fig. 2 sind - wie aus Fig. 2 selbst nicht unmittelbar entnehmbar - ohne Auslöseverzögerung bzw. unverzögert oder verzögerungsfrei ausgebildet, und lösen folglich bei einem erkannten Fehlerstrom so schnell als möglich aus. Um auch bei derartigen Fehlerstromschutzschaltern 22, 23 ein unterbrechungsfreies Umschalten zu ermöglichen, ist bevorzugt vorgesehen, dass das Schaltgerät 1 wenigstens einen ersten Steuerausgang 10 aufweist, zur vorgebbaren Beeinflussung des Auslöseverhaltens eines Fehlerstromschutzschalters 22, 23.

Der Auslösestromkreis 19 des ersten und des zweiten Fehlerstromschutzschalters 22, 23 gemäß Fig. 2 weisen weiters jeweils eine erste Schaltungsanordnung 21 auf, zur vorgebbaren Verlängerung einer Auslösezeit des Auslösestromkreises 19 um einen vorgebbaren Zeitraum. Je nach Ausbildung des Auslösekreises kann besagte erste Schaltungsanordnung 21 unterschiedlich ausgebildet sein. In gegenständlichem Beispiel ist etwa vorgesehen, dass die erste Schaltungsanordnung 21 zum Kurzschließen der Verbindung zwischen eines Sekundärwicklung des Summenstromwandlers 32 und dem Permanentmagnetauslöser 31 ausgebildet ist. Es können jedoch auch andere Wirkmechanismen und Schaltungsanordnungen vorgesehen sein.

Gemäß der dargestellten Ausführungsform eines Fehlerstromschutzschalters 22, 23 ist weiters bevorzugt vorgesehen, dass der Fehlerstromschutzschalter 22, 23 wenigstens einen ersten Steuereingang 24 aufweist, zur Ansteuerung der ersten Schaltungsanordnung 21.

Es kann je Art der Ansteuerung der ersten Schaltungsanordnung 21 vorgesehen sein, etwa eine von dem Schaltgerät 1 separat ausgeführte Ansteuerung, wobei bevorzugt vorgesehen ist, dass das Schaltgerät 1 wenigstens einen ersten Steuerausgang 10 aufweist, zur vorgebbaren Beeinflussung des Auslöseverhaltens eines Fehlerstromschutzschalters 22, 23, welcher bevorzugt mit der Steuereinheit 9 schaltungstechnisch verbunden ist.

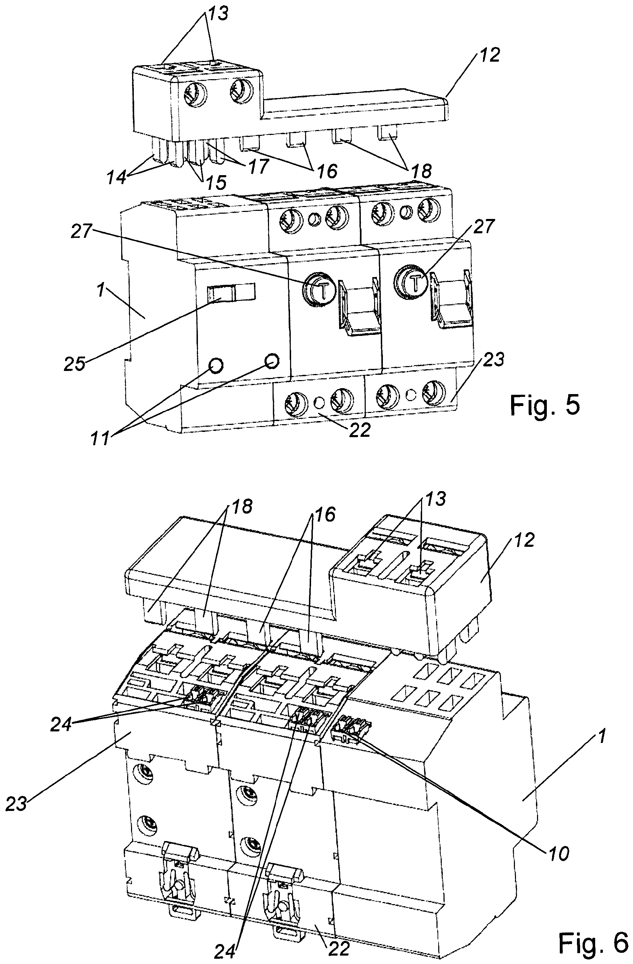

Wie in Fig. 2 dargestellt, weist das Schaltgerät 1 einen ersten Steuerausgang 10 und einen zweiten Steuerausgang auf, wobei der erste Steuerausgang 10 schaltungstechnisch mit dem ersten Steuereingang 24 des ersten Fehlerstromschutzschalters 22 verbunden ist, und der zweite Steuerausgang mit dem ersten Steuereingang 24 des zweiten Fehlerstromschutzschalters 23 verbunden ist. Fig. 6 zeigt eine körperlich Ausbildung einer derartigen Anordnung in Explosionsdarstellung.

Es kann auch vorgesehen sein, dass einer der Fehlerstromschutzschalter 22, 23 als Fehlerstromschutzschalter mit verzögerter Fehlerstromauslösung ausgebildet ist, und dass der andere Fehlerstromschutzschalter 23, 22 als unverzögerter Fehlerstromschutzschalter 22, 23 ausgebildet ist.

Fig. 3 zeigt eine dritte Ausführungsform einer Anordnung eines Schaltgeräts 1 und zweier Fehlerstromschutzschalter 22, 23, wobei die beiden Fehlerstromschutzschalter 22, 23 als Fehlerstromschutzschalter mit verzögerter Fehlerstromauslösung ausgebildet sind, und wobei der Schalter des Schaltgeräts 1 als elektronischer Schalter 7 ausgebildet ist, und vier TRIACs umfasst, welche jeweils von der Steuereinheit 9 angesteuert werden.

Bevorzugt ist vorgesehen, dass das Schaltgerät 1, ebenso wie die Fehlerstromschutzschalter 22, 23 ein Isolierstoffgehäuse aufweist.

Es kann vorgesehen sein, die beiden Fehlerstromschutzschalter 22, 23 und das Schaltgerät 1 etwa mittels Drahtbrücken schaltungstechnisch zu verbinden. Da dies aufwändig und fehleranfällig ist, ist besonders bevorzugt vorgesehen, dass die betreffenden Komponenten mittels eines Kopplungsvorrichtung 12 für elektrische Schaltgeräte verbunden sind. Derartige Kopplungsvorrichtungen 12 für elektrische Schaltgeräte 1 sind etwa in den Fig. 4 bis 6 dargestellt, in welchen bevorzugte Ausgestaltungen gegenständlicher Anordnungen dargestellt sind.

Eine bevorzugte Kopplungsvorrichtung 12 für elektrische Schaltgeräte weist wenigstens einen ersten Eingang 13 und wenigstens einen ersten Ausgang 14 auf, wobei der erste Eingang 13 mit dem ersten Ausgang 14 schaltungstechnisch verbunden ist, wobei die Kopplungsvorrichtung 12 wenigstens einen zweiten Eingang 15 und wenigstens einen zweiten Ausgang 16 aufweist, wobei der zweite Eingang 15 mit dem zweiten Ausgang 16 schaltungstechnisch verbunden ist, wobei die Kopplungsvorrichtung 12 wenigstens einen dritten Eingang 17 und wenigstens einen dritten Ausgang 18 aufweist, wobei der dritte Eingang 17 mit dem dritten Ausgang 18 schaltungstechnisch verbunden ist.

Bevorzugt ist weiters vorgesehen, dass der wenigstens eine erste Eingang 13 umfassend wenigstens eine Schraubanschlussklemme ausgebildet ist, und/oder dass der wenigstens eine zweite und/oder dritte Eingang 15, 17 und/oder der wenigstens eine erste und/oder zweite und/oder dritte Ausgang 14, 16, 18 als Steckkontakt ausgebildet sind.

Die Ausführungsform einer Kopplungsvorrichtung 12 gemäß den Fig. 5 und 6 ist in der vorstehend beschriebenen bevorzugten Weise ausgestaltet, wobei die betreffende Ausführungsform weiters die entsprechenden Kontakte und Verbindungsleitungen aufweist, um die ersten Steuerausgänge des Schaltgeräts 1 mit den entsprechenden 24 des ersten und des zweiten Fehlerstromschutzschalters 22, 23 zu verbinden.

Die Anordnung gemäß Fig. 4 weist einen von den weiters beschriebenen konstruktiven Ausgestaltungen der gegenständlichen Erfindung abweichenden Aufbau auf. Diese Anordnung weist kein Schaltgerät 1 auf, sondern lediglich ein Steuergerät 40. Bevorzugt ist ein derartiges Steuergerät 40 gemäß den bevorzugten Ausführungsformen eines gegenständlichen Schaltgeräts 1 ausgebildet, wobei das Steuergerät 40 selbst keinen Schalter aufweist, sondern lediglich die zur Ansteuerung eines externen Schalters erforderlichen elektrischen Schnittstellen.

Die Anordnung gemäß Fig. 4 weist weiters eine speziell ausgestaltete Kopplungs/Schaltvorrichtung 41 auf, welche einen Schalter umfasst. Diese Kopplungs/Schaltvorrichtung 41 weist die entsprechenden Zuleitungen für die Leitungen des elektrischen Energieversorgungsnetzes auf, sowie entsprechende Ausgänge, zur Ansteuerung des ersten bzw. zweiten Fehlerstromschutzschalters 22, 23. Die Kopplungs/Schaltvorrichtung 41 umfasst weiters einen Schalter, welcher entsprechend den vorstehenden Ausführungen zu Schaltern in einem Schaltgerät 1 ausgebildet ist, und daher ein unterbrechungsfreies Umschalten des Laststromes vom einem der beiden Fehlerstromschutzschalter auf den anderen ermöglicht. Weiters weist die Kopplungs/Schaltvorrichtung 41 eine Schnittstelle zum Empfang von Schaltaufträgen durch das Steuergerät 40 auf.

Die gegenständliche Erfindung betrifft weiters ein Verfahren zur unterbrechungsfreien Funktionsprüfung eines ersten Fehlerstromschutzschalters 22, wobei ein Laststrom über den ersten Fehlerstromschutzschalter 22 geführt wird, wobei ein zweiter Fehlerstromschutzschalter 23 eingangsseitig parallel zum ersten Fehlerstromschutzschalter 22 an den Laststrom geschaltet wird, wobei der Laststrom unterbrechungsfrei vom ersten Fehlerstromschutzschalter 22 auf den zweiten Fehlerstromschutzschalter 23 umgeschaltet wird, wobei eine Funktionsprüfung des ersten Fehlerstromschutzschalters 22 durchgeführt wird, wobei nach erfolgreicher Durchführung der Funktionsprüfung des ersten Fehlerstromschutzschalters 22 der erste Fehlerstromschutzschalter 22 eingeschaltet wird, wobei der erste Fehlerstromschutzschalter 22 eingangsseitig parallel zum zweiten Fehlerstromschutzschalter 23 an den Laststrom geschaltet wird, wobei der Laststrom unterbrechungsfrei vom zweiten Fehlerstromschutzschalter 23 auf den ersten Fehlerstromschutzschalter 22 umgeschaltet wird, und wobei der zweite Fehlerstromschutzschalter 23 abgeschaltet wird.

Mit einem derartigen Verfahren kann ein Fehlerstromschutzschalter 22, 23 unterbrechungsfrei auf dessen Funktion getestet werden.

Nachfolgend wird der Ablauf einer besonders bevorzugten Ausführungsform eines erfindungsgemäßen Verfahrens beschrieben, wobei nicht sämtliche der beschriebenen bevorzugten Verfahrensschritte ausgeführt werden müssen.

Der Laststrom fließt über das Schaltgerät 1, und bevorzugt vorher über die Kopplungsvorrichtung 12, sowie über den ersten Fehlerstromschutzschalter 22 an einen Verbraucher. Schaltungstechnisch parallel zum ersten Fehlerstromschutzschalter 22 ist der zweite Fehlerstromschutzschalter 23 angeordnet, wobei der zweite Fehlerstromschutzschalter 23 zu diesem Zeitpunkt eingeschaltet ist, im Sinne geschlossener Trennkontakte 20, jedoch eingangsseitig nicht mit dem Energieversorgungsnetz verbunden ist. Es fließt daher zu diesem Zeitpunkt kein Laststrom über den zweiten Fehlerstromschutzschalter 23 an einen Verbraucher.

Der zweite Fehlerstromschutzschalter 23 ist jedoch ausgangs- bzw. verbraucherseitig mit den entsprechenden Anschlüssen des ersten Fehlerstromschutzschalters 22 verbunden, weshalb auch dessen Prüfeinrichtung im Wesentlichen am selben elektrischen Potential liegt, wie die entsprechenden Einrichtungen des ersten Fehlerstromschutzschalters 22. Gemäß einer bevorzugten Ausführungsform des erfindungsgemäßen Verfahrens ist vorgesehen, vor der weiteren Prüfung der Funktion der Fehlerstromauslösung des ersten Fehlerstromschutzschalters 22, eine entsprechende Funktionsprüfung des zweiten Fehlerstromschutzschalters 23 durchzuführen, bevorzugt durch entsprechende Betätigung des Prüftasters 27 des zweiten Fehlerstromschutzschalters 23.

Zur unterbrechungsfreien Prüfung, wird der zweite Fehlerstromschutzschalter 23 mittels dem Schaltgerät 1 eingangsseitig parallel zum ersten Fehlerstromschutzschalter 22 an das Energieversorgungsnetz geschaltet. In diesem Zustand fließt sowohl über dem ersten als auch dem zweiten Fehlerstromschutzschalter 22, 23 der Laststrom zu einem Verbraucher, sofern ein solcher Verbraucher in diesem Zeitpunkt betrieben wird.

Bevorzugt ist vorgesehen, dass vor dem unterbrechungsfreien Umschalten vom ersten Fehlerstromschutzschalter 22 auf den zweiten Fehlerstromschutzschalter 23 überprüft wird, ob der zweite Fehlerstromschutzschalter 23 eingeschaltet ist. Dadurch kann ein Abschalten des ersten Fehlerstromschutzschalters 22 verhindert werden, solange der zweite Fehlerstromschutzschalter 23 noch nicht bereits ist den Laststrom zu führen.

Gegebenenfalls kann vorgesehen sein, dass die Auslösestromkreise 19 des ersten und des zweiten Fehlerstromschutzschalters 22, 23 gehemmt werden, bzw. während dem unterbrechungsfreien Umschalten vom ersten Fehlerstromschutzschalter 22 auf den zweiten Fehlerstromschutzschalter 23 eine erste Auslösezeit des ersten Fehlerstromschutzschalters 22 und eine zweite Auslösezeit des zweiten Fehlerstromschutzschalters 23 für eine vorgebbare Zeitdauer vorgebbar verlängert werden. Dabei kann auch eine vollständige Unterbindung einer Auslösung eine Verlängerung der Auslösezeit darstellen.

Nachfolgend wird der Laststrom unterbrechungsfrei vom ersten auf den zweiten Fehlerstromschutzschalter umgeschaltet, und folglich der erste Fehlerstromschutzschalter 22 vom Laststrom getrennt, wobei dieser Umschaltvorgang bevorzugt mit einem gegenständlichen Schaltgerät durchgeführt wird. Der erste Fehlerstromschutzschalter 22 ist nach wie vor auf der Verbraucherseite mit dem zweiten Fehlerstromschutzschalter 23 verbunden.

Sofern eine Hemmung der Auslösestromkreise des ersten und des zweiten Fehlerstromschutzschalters 22, 23 erfolgte, wird diese Hemmung aufgehoben.

Bevorzugt ist vorgesehen, dass nachfolgend dem unterbrechungsfreien Umschalten vom ersten Fehlerstromschutzschalter 22 auf den zweiten Fehlerstromschutzschalter 23 ein erstes, insbesondere optisches, Signal ausgegeben wird. Dadurch wird der Benutzer davon in Kenntnis gesetzt, dass eine Prüfung der Funktion der Fehlerstromauslösung des ersten Fehlerstromschutzschalters 22 erfolgen kann. Bevorzugt ist vorgesehen, dass dem Benutzer in dieser Art weitere Betriebszustände bzw. Anweisungen, etwa hinsichtlich einer Betätigung der Prüfeinrichtung eines bestimmten Fehlerstromschutzschalters, kundgetan werden. Nachfolgend kann die Funktion der Fehlerstromauslösung des ersten Fehlerstromschutzschalters 22 getestet werden. Hiezu ist die Betätigung des Prüftasters 27 des ersten Fehlerstromschutzschalters 22 vorgesehen, welche manuell erfolgen kann, oder - sofern schaltungstechnisch vorgesehen - mittels einer fernmeldetechnischen Ansteuerung des Prüftasters 27, etwa durch das Schaltgerät 1. Da der erste Fehlerstromschutzschalter 22 lastseitig mit dem zweiten Fehlerstromschutzschalter 23 verbunden ist, funktioniert ein herkömmlicher Prüfstromkreis 30 weiter.

Nach erfolgreicher Prüfung der Funktion der Fehlerstromauslösung des ersten Fehlerstromschutzschalters 22, daher, sofern dieser erfolgreich ausgelöst hat, erfolgt eine Umschaltung vom zweiten Fehlerstromschutzschalter 23 auf den ersten Fehlerstromschutzschalter 22. Dabei ist vorgesehen, dass in einem ersten Schritt der erste Fehlerstromschutzschalter 22 wieder eingeschaltet wird. Nachfolgend wird der erste Fehlerstromschutzschalter 22 mittels dem Schaltgerät 1 wieder eingangsseitig parallel zum zweiten Fehlerstromschutzschalter 23 an den Laststrom geschaltet, und nachfolgend der zweite Fehlerstromschutzschalter 23 eingangsseitig vom Laststrom getrennt.

In diesem Zustand ist - sofern eine solche nicht bereits durchgeführt wurde - eine Prüfung der Fehlerstromauslösung des zweiten Fehlerstromschutzschalters 23 vorgesehen, etwa durch Betätigung des entsprechenden Prüfstromkreises 30 des zweiten Fehlerstromschutzschalters 23.

Bei der Prüfung bzw. Verwendung von Fehlerstromschutzschaltern 22, 23, welche eine Verzögerung der Fehlerstromauslösung aufweisen, sind bevorzugt lediglich die vorstehend beschriebenen Verfahrensschritte vorgesehen.

Bei der Prüfung bzw. Verwendung von Fehlerstromschutzschaltern 22, 23, welche keine entsprechende Verzögerung der Fehlerstromauslösung aufweisen, ist bevorzugt vorgesehen, vor bzw. während eines Umschaltvorganges von einem Fehlerstromschutzschalter 22, 23 auf den anderen Fehlerstromschutzschalter 23, 22 - wie vorstehend bereits ausgeführt - die Auslösezeit der betreffenden Fehlerstromschutzschalter 22, 23 zu verlängern und/oder die Auslösung vollständig zu hemmen.

## Patentansprüche

1. Anordnung aus einem ersten Fehlerstromschutzschalter (22), einem zweiten Fehlerstromschutzschalter (23), sowie einem Schaltgerät (1),
- wobei das Schaltgerät (1) wenigstens einen ersten elektrischen Schaltgerät-Eingang (2), sowie wenigstens einen ersten elektrischen Schaltgerät-Ausgang (3) und wenigstens einen zweiten elektrischen Schaltgerät-Ausgang (4) aufweist, wobei in einem ersten Betriebszustand des Schaltgeräts (1) der erste Schaltgerät-Eingang (2) mit dem ersten Schaltgerät-Ausgang (3) schaltungstechnisch verbunden ist, wobei in einem zweiten Betriebszustand des Schaltgeräts (1) der erste Schaltgerät-Eingang (2) mit dem zweiten Schaltgerät-Ausgang (4) schaltungstechnisch verbunden ist, wobei das Schaltgerät (1) zum unterbrechungsfreien Übergang vom ersten Betriebszustand in den zweiten Betriebszustand und/oder vom zweiten Betriebszustand in den ersten Betriebszustand ausgebildet ist, wobei das Schaltgerät (1) wenigstens einen ersten Steuerausgang und einen zweiten Steuerausgang (10) zur vorgebbaren Beeinflussung des Auslöseverhaltens der Fehlerstromschutzschalter (22, 23) während des unterbrechungsfreien Umschaltens aufweist,
- wobei der erste Fehlerstromschutzschalter (22) und der zweite Fehlerstromschutzschalter (23) jeweils als Fehlerstromschutzschalter (22, 23) mit einem Auslösestromkreis (19) sowie mit Trennkontakten (20) ausgebildet ist, wobei der Auslösestromkreis (19) zum Trennen der Trennkontakte (20) wenigstens mittelbar mit diesen in Wirkverbindung steht, wobei der Auslösestromkreis (19) eine erste Schaltungsanordnung (21) aufweist, zur vorgebbaren Verlängerung einer Auslösezeit des Auslösestromkreises (19) um einen vorgebbaren Zeitraum, und dass der Fehlerstromschutzschalter (22, 23) wenigstens einen ersten Steuereingang (24) aufweist, zur Ansteuerung der ersten Schaltungsanordnung (21),
- wobei der erste Fehlerstromschutzschalter (22) und der zweite Fehlerstromschutzschalter (23) mittels einer Kopplungseinheit (12) schaltungstechnisch zueinander parallel mit dem Schaltgerät (1) gekoppelt sind, und wobei der erste Steuerausgang (10) schaltungstechnisch mit dem ersten Steuereingang (24) des ersten Fehlerstromschutzschalters (22) verbunden ist, und der zweite Steuerausgang mit dem ersten Steuereingang (24) des zweiten Fehlerstromschutzschalters (23) verbunden ist.

2. Anordnung nach Anspruch 1, **dadurch gekennzeichnet, dass** das Schaltgerät (1) wenigstens einen mechanischen Schalter (5) mit wenigstens bereichsweise überlappenden Schaltkontakten (6) aufweist.

3. Anordnung nach Anspruch 1 oder 2, **dadurch gekennzeichnet, dass** das Schaltgerät (1) wenigstens einen elektronischen Schalter (7) aufweist, insbesondere umfassend wenigstens einen Triac (8).

4. Anordnung nach einem der Ansprüche 1 bis 3, **dadurch gekennzeichnet, dass** das Schaltgerät (1) wenigstens eine Steuereinheit (9) aufweist, zur Steuerung der Übergänge von einem Betriebszustand zu einem anderen Betriebszustand.

5. Anordnung nach einem der Ansprüche 1 bis 4, **dadurch gekennzeichnet, dass** das Schaltgerät (1) wenigstens eine Spannungsmessvorrichtung umfasst, zum Messen einer Spannung an dem ersten Schaltgerät-Ausgang (3) und/oder dem zweiten Schaltgerät-Ausgang (4).

6. Anordnung nach einem der Ansprüche 4 oder 5, **dadurch gekennzeichnet, dass** die Steuerausgänge (10) mit der Steuereinheit (9) schaltungstechnisch verbunden sind.

7. Anordnung nach einem der Ansprüche 1 bis 6, **dadurch gekennzeichnet, dass** das Schaltgerät (1) wenigstens ein, insbesondere optisches, Signalmittel (11) aufweist, welches insbesondere von der Steuereinheit (9) angesteuert ist.

8. Anordnung nach einem der Ansprüche 1 bis 7, **dadurch gekennzeichnet, dass** das Schaltgerät (1) und die Kopplungseinheit (12) als Kopplungs/Schaltvorrichtung (41) ausgebildet sind.

9. Verfahren zur unterbrechungsfreien Funktionsprüfung eines ersten Fehlerstromschutzschalters (22), wobei ein Laststrom über den ersten Fehlerstromschutzschalter (22) geführt wird, wobei ein zweiter Fehlerstromschutzschalter (23) eingangsseitig parallel zum ersten Fehlerstromschutzschalter (22) an den Laststrom geschaltet wird, dass der Laststrom unterbrechungsfrei vom ersten Fehlerstromschutzschalter (22) auf den zweiten Fehlerstromschutzschalter (23) umgeschaltet wird, dass nachfolgend eine Funktionsprüfung des ersten Fehlerstromschutzschalters (22) durchgeführt wird, dass nach erfolgreicher Durchführung der Funktionsprüfung des ersten Fehlerstromschutzschalters (22) der erste Fehlerstromschutzschalter (22) eingeschaltet wird, dass der erste Fehlerstromschutzschalter (22) eingangsseitig parallel zum zweiten Fehlerstromschutzschalter (23) an den Laststrom geschaltet wird, dass der Laststrom unterbrechungsfrei vom zweiten Fehlerstromschutzschalter (23) auf den ersten Fehlerstromschutzschalter (22) umgeschaltet wird, **dadurch gekennzeichnet, dass** während dem unterbrechungsfreien Umschalten vom ersten Fehlerstromschutzschalter (22) auf den zweiten Fehlerstromschutzschalter (23) und/oder vom zweiten Fehlerstromschutzschalter (23) auf den ersten Fehlerstromschutzschalter (22) eine erste Auslösezeit des ersten Fehlerstromschutzschalters (22) und eine zweite Auslösezeit des zweiten Fehlerstromschutzschalters (23) für eine vorgebbare Zeitdauer vorgebbar verlängert werden.

10. Verfahren nach Anspruch 9, **dadurch gekennzeichnet, dass** nachfolgend der zweite Fehlerstromschutzschalter (23) abgeschaltet wird.

11. Verfahren nach Anspruch 9 oder 10, **dadurch gekennzeichnet, dass** vor dem unterbrechungsfreien Umschalten vom ersten Fehlerstromschutzschalter (22) auf den zweiten Fehlerstromschutzschalter (23) überprüft wird, ob der zweite Fehlerstromschutzschalter (23) eingeschaltet ist.

12. Verfahren nach Anspruch 9, 10 oder 11, **dadurch gekennzeichnet, dass** nachfolgend dem unterbrechungsfreien Umschalten vom ersten Fehlerstromschutzschalter (2) auf den zweiten Fehlerstromschutzschalter (23) ein erstes, insbesondere optisches, Signal ausgegeben wird.

## Claims

1. Arrangement of a first residual current circuit breaker (22), a second residual current circuit breaker (23) and a switching device (1),
- wherein the switching device (1) has at least one first electrical switching device input (2), as well as at least one first electrical switching device output (3) and at least one second electrical switching device output (4), wherein in a first operating state of the switching device (1) the first switching device input (2) is connected by circuitry to the first switching device output (3), wherein in a second operating state of the switching device (1) the first switching device input (2) is connected by circuitry to the second switching device output (4), wherein the switching device (1) is configured for transition without interruption from the first operating state to the second operating state and/or from the second operating state to the first operating state, wherein the switching device (1) has at least one first control output and a second control output (10) for influencing in a predefinable manner the tripping behaviour of the residual current circuit breakers (22, 23) during the interruption-free switching,
- wherein the first residual current circuit breaker (22) and the second residual current circuit breaker (23) is configured respectively as residual current circuit breakers (22, 23) with a trip circuit (19) and with isolating contacts (20), wherein the trip circuit (19) for isolating the isolating contacts (20) is in operative connection with the latter at least indirectly, wherein the trip circuit (19) has a first circuit arrangement (21) for extending a tripping time of the trip circuit (19) in a predefinable manner by a predefinable period and in that the residual current circuit breakers (22, 23) has at least one first control input (24) for controlling the first circuit arrangement (21),
- wherein the first residual current circuit breaker (22) and the second residual current circuit breaker (23) are coupled to one another by means of a coupling unit (12) by circuitry parallel to the switching device (1), and wherein the first control output (10) is connected by circuitry to the first control input (24) of the first residual current circuit breaker (22) and the second control output is connected to the first control input (24) of the second residual current circuit breaker (23).

2. Arrangement according to claim 1, **characterised in that** the switching device (1) has at least one mechanical switch (5) with switching contacts (6) that overlap at least in some areas.

3. Arrangement according to claim 1 or 2, **characterised in that** the switching device (1) has at least one electronic switch (7), particularly including at least one triac (8).

4. Arrangement according to any claims 1 to 3, **characterised in that** the switching device (1) has at least one control unit (9) for controlling the transitions from one operating state to another operating state.

5. Arrangement according to any of claims 1 to 4, **characterised in that** the switching device (1) comprises at least one voltage measuring device for measuring a voltage at the first switching device output (3) and/or the second switching device output (4).

6. Arrangement according to any of claims 4 or 5, **characterised in that** the control outputs (10) are connected by circuitry to the control unit (9).

7. Arrangement according to any of claims 1 to 6, **characterised in that** the switching device (1) has at least one, in particular optical, signalling means (11), which is controlled particularly by the control unit (9).

8. Arrangement according to any of claims 1 to 7, **characterised in that** the switching device (1) and the coupling unit (12) are configured as coupling/switching device (41).

9. Method for functionally testing a first residual current circuit breaker (22) without interruption, wherein a load current flows through the first residual current circuit breaker (22), wherein a second residual current circuit breaker (23) is connected to the load current on the input side parallel to the first residual current circuit breaker (22), in that the load current is switched without interruption from the first residual current circuit breaker (22) to the second residual current circuit breaker (23), in that a functional test of the first residual current circuit breaker (22) is subsequently performed, in that following successful execution of the functional test of the first residual current circuit breaker (22) the first residual current circuit breaker (22) is switched on, in that the first residual current circuit breaker (22) is connected to the load current on the input side parallel to the second residual current circuit breaker (23), in that the load current is switched without interruption from the second residual current circuit breaker (23) to the first residual current circuit breaker (22), **characterised in that** while switching without interruption from the first residual current circuit breaker (22) to the second residual current circuit breaker (23) and/or from the second residual current circuit breaker (23) to the first residual current circuit breaker (22) a first trigger time of the first residual current circuit breaker (22) and a second trigger time of the second residual current circuit breaker (23) are extended by a predefinable time period.

10. Method according to claim 9, **characterised in that** the second residual current circuit breaker (23) is subsequently disconnected.

11. Method according to claim 9 or 10, **characterised in that** prior to switching without interruption from the first residual current circuit breaker (22) to the second residual current circuit breaker (23) a check is performed to determine whether the second residual current circuit breaker (23) is switched on.

12. Method according to claim 9, 10 or 11, **characterised in that** that after switching without interruption from the first residual current circuit breaker (2) to the second residual current circuit breaker (23) a first, in particular optical, signal is output.

## Revendications

1. Dispositif d'un premier disjoncteur de courant de défaut (22), d'un second disjoncteur de courant de défaut (23), ainsi que d'un appareil de commutation (1),
- selon lequel l'appareil de commutation (1) présente au moins une première entrée d'appareil de commutation électrique (2) ainsi qu'au moins une première sortie d'appareil de commutation électrique (3) et au moins une seconde sortie d'appareil de commutation électrique (4), selon lequel dans un premier état de fonctionnement de l'appareil de commutation (1), la première entrée d'appareil de commutation (2) est connectée à la première sortie d'appareil de commutation (3) sur le plan de la technique des circuits, selon lequel dans un second état de fonctionnement de l'appareil de commutation (1), la première entrée d'appareil de commutation (2) est connectée à la seconde sortie d'appareil de commutation (4) sur le plan de la technique des circuits, selon lequel l'appareil de commutation (1) est configuré pour passer sans coupure du premier état de fonctionnement au second état de fonctionnement et/ou du second état de fonctionnement au premier état de fonctionnement, selon lequel l'appareil de commutation (1) présente au moins une première sortie de commande et une seconde sortie de commande (10) pour influencer de manière prédéfinissable le comportement de déclenchement du disjoncteur de courant de défaut (22, 23) pendant la commutation sans coupure,
- selon lequel le premier disjoncteur de courant de défaut (22) et le second disjoncteur de courant de défaut (23) sont respectivement configurés comme des disjoncteurs de courant de défaut (22, 23) avec un circuit de déclenchement (19) ainsi qu'avec des contacts de coupure (20), selon lequel le circuit de déclenchement (19), pour la coupure des contacts de coupure (20), est en liaison active au moins indirectement avec ceux-ci, selon lequel le circuit de déclenchement (19) présente un premier dispositif de commutation (21), pour la prolongation prédéfinissable d'un délai de déclenchement du circuit de déclenchement (19) à concurrence d'un laps de temps prédéfinissable, et le disjoncteur de courant de défaut (22, 23) présente au moins une première entrée de commande (24), pour commander le premier dispositif de commutation (21),
- selon lequel le premier disjoncteur de courant de défaut (22) et le second disjoncteur de courant de défaut (23) sont couplés l'un à l'autre, sur le plan de la technique des circuits, au moyen d'une unité de couplage (12), en parallèle avec l'appareil de commutation (1), et selon lequel la première sortie de commande (10) est connectée, sur le plan de la technique des circuits, à la première entrée de commande (24) du premier disjoncteur de courant de défaut (22), et la seconde sortie de commande est connectée à la première entrée de commande (24) du second disjoncteur de courant de défaut (23).

2. Dispositif selon la revendication 1, **caractérisé en ce que** l'appareil de commutation (1) présente au moins un commutateur mécanique (5) avec au moins des contacts de commutation (6) qui se recouvrent par zones.

3. Dispositif selon la revendication 1 ou 2, **caractérisé en ce que** l'appareil de commutation (1) présente au moins un commutateur électronique (7), en particulier comprenant au moins un triac (8).

4. Dispositif selon l'une des revendications 1 à 3, **caractérisé en ce que** l'appareil de commutation (1) présente au moins une unité de commande (9), pour commander les passages d'un état de fonctionnement à un autre état de fonctionnement.

5. Dispositif selon l'une des revendications 1 à 4, **caractérisé en ce que** l'appareil de commutation (1) présente au moins un dispositif de mesure de tension, pour mesurer une tension à la première sortie (3) de l'appareil de commutation et/ou à la seconde sortie (4) de l'appareil de commutation.

6. Dispositif selon l'une des revendications 4 ou 5, **caractérisé en ce que** les sorties de commande (10) sont connectées, sur le plan de la technique des circuits, à l'unité de commande (9).

7. Dispositif selon l'une des revendications 1 à 6, **caractérisé en ce que** l'appareil de commutation (1) présente au moins un moyen de signalisation (11), en particulier optique, lequel, en particulier, est commandé par l'unité de commande (9).

8. Dispositif selon l'une des revendications 1 à 7, **caractérisé en ce que** l'appareil de commutation (1) et l'unité de couplage (12) sont configurés comme un dispositif de couplage/commutation (41).

9. Procédé pour contrôler le fonctionnement sans coupure d'un premier disjoncteur de courant de défaut (22), selon lequel un courant de charge est conduit à travers le premier disjoncteur de courant de défaut (22), selon lequel un second disjoncteur de courant de défaut (23) est connecté au courant de charge du côté entrée en parallèle avec le premier disjoncteur de courant de défaut (22), le courant de charge est commuté sans coupure du premier disjoncteur de courant de défaut (22) vers le second disjoncteur de courant de défaut (23), ensuite un contrôle du fonctionnement du premier disjoncteur de courant de défaut (22) est effectué, après une exécution couronnée de succès du contrôle de fonctionnement du premier disjoncteur de courant de défaut (22), le premier disjoncteur de courant de défaut (22) est enclenché, le premier disjoncteur de courant de défaut (22) est connecté au courant de charge du côté entrée en parallèle avec le second disjoncteur de courant de défaut (23), le courant de charge est commuté sans coupure du second disjoncteur de courant de défaut (23) vers le premier disjoncteur de courant de défaut (22), **caractérisé en ce que**, pendant la commutation sans coupure du premier disjoncteur de courant de défaut (22) vers le second disjoncteur de courant de défaut (23) et/ou du second disjoncteur de courant de défaut (23) vers le premier disjoncteur de courant de défaut (22), un premier délai de déclenchement du premier disjoncteur de courant de défaut (22) et un second délai de déclenchement du second disjoncteur de courant de défaut (23) sont prolongés de manière prédéfinissable d'une durée prédéfinissable.

10. Procédé selon la revendication 9, **caractérisé en ce que** le second disjoncteur de courant de défaut (23) est ensuite déconnecté.

11. Procédé selon la revendication 9 ou 10, **caractérisé en ce que,** avant la commutation sans coupure du premier disjoncteur de courant de défaut (22) vers le second disjoncteur de courant de défaut (23), il est contrôlé si le second disjoncteur de courant de défaut (23) est enclenché.

12. Procédé selon la revendication 9, 10 ou 11, **caractérisé en ce que,** après la commutation sans coupure du premier disjoncteur de courant de défaut (2) vers le second disjoncteur de courant de défaut (23), un premier signal, en particulier optique, est délivré.
